Europäisches Patentamt

European Patent Office

Office européen des brevets

(11) Veröffentlichungsnummer: **0 487 904 A2**

# (12) EUROPÄISCHE PATENTANMELDUNG

(21) Anmeldenummer: **91118236.8**

(51) Int. Cl.5: **F16K 3/02**

(22) Anmeldetag: **25.10.91**

(30) Priorität: **28.11.90 DE 4037863**

(43) Veröffentlichungstag der Anmeldung:
**03.06.92 Patentblatt 92/23**

(84) Benannte Vertragsstaaten:
**AT BE CH ES FR GB LI LU NL**

(71) Anmelder: **Johannes Erhard, H. Waldenmaier Erben Süddeutsche Armaturenfabrik GmbH & Co.**
**Postfach 1280 Meeboldstrasse 22**
**W-7920 Heidenheim(DE)**

(72) Erfinder: **Vogel, Friedrich**
**Im Haintal 9**
**W-7920 Heidenheim(DE)**
Erfinder: **Uhl, Günter**
**Römerstrasse 61**
**W-7920 Heidenheim(DE)**
Erfinder: **Maier, Heinz**
**Eulenweg 3**
**W-7921 Nattheim(DE)**
Erfinder: **Ortwein, Heinz**
**Zeppelinstrasse 45**
**W-7923 Königsbronn(DE)**

Erfinder: **Marre, Lionel**
**Ringstrasse 21**
**W-7923 Ochsenberg(DE)**
Erfinder: **Vollmar, Berthold**
**Wildstrasse 11**
**W-7920 Heidenheim(DE)**
Erfinder: **Altenbrandt, Erhard**
**Steigstrasse 4**
**W-8889 Syrgenstein(DE)**
Erfinder: **Niederberger, Walter**
**Dachsweg 11**
**W-7924 Steinheim(DE)**
Erfinder: **Weber, Jörg-W.**
**Friedrich-Pfennig-Strasse 10**
**W-7920 Heidenheim(DE)**
Erfinder: **Geiger, Wolfgang**
**Weberstrasse 24**
**W-7924 Steinheim(DE)**
Erfinder: **Zimmermann, Claus**
**Wiesenweg 15**
**W-7929 Gerstetten(DE)**

(74) Vertreter: **Seeger, Wolfgang, Dipl.-Phys.**
**Georg-Hager-Strasse 40**
**W-8000 München 70(DE)**

(54) **Absperrarmatur mit Ouerdichtung.**

(57) Absperrarmatur mit zwei Gehäusehälften (14), die eine Durchflußöffnung (18) umschließen und im Randbereich miteinander verbunden sind, von denen mindestens eine Gehäusehälfte einen zurückgesetzten inneren Abschnitt zur Aufnahme der Schieberplatte aufweist, und mit einem den Bereich der Schieberplatte unten und seitlich umgebenden U-förmigen Dichtungskörper, dadurch gekennzeichnet, daß jede Gehäusehälte (14) in ihrem oberen Bereich eine quer verlaufende Vertiefung (52) zur Aufnahme der Stopfbuchsendichtung (54), (56), (58) hat, die seitlich und nach unten hin begrenzt, nach oben hin jedoch offen ist, und daß eine an den Oberseiten der Gehäusehälften befestigbare Brille (60) vorgesehen ist, die einen Spalt zur Aufnahme der Schieberplatte (16) und einen nach unten teilweise in die Vertiefung vorstehenden, zu dieser komplementär ausgebildeten Bereich aufweist.

EP 0 487 904 A2

Die Erfindung betrifft eine Absperrarmatur mit zwei Gehäusehälften, die eine Durchflußöffnung umschließen und im Randbereich miteinander verbunden sind, von denen mindestens eine Gehäusehälfte einen zurückgesetzten inneren Abschnitt zur Aufnahme der Schieberplatte aufweist, und mit einem den Bereich der Schieberplatte unten und seitlich umgebenden U-förmigen Dichtungskörper.

Aufgabe der Erfindung ist es, eine Absperrarmatur mit einer einfach herzustellende und leicht zu wartenden Querdichtung zu schaffen.

Diese Aufgabe ist gemäß der Erfindung bei Absperrarmaturen der eingangs genannten Art dadurch gelöst, daß jede Gehäusehälte in ihrem oberen Bereich eine quer verlaufende Vertiefung zur Aufnahme der Stopfbuchsendichtung hat, die seitlich und nach unten hin begrenzt, nach oben hin jedoch offen ist, und

daß eine an den Oberseiten der Gehäusehälften befestigbare Brille vorgesehen ist, die einen Spalt zur Aufnahme der Schieberplatte und einen nach unten teilweise in die Vertiefung vorstehenden, zu dieser komplementär ausgebildeten Bereich aufweist.

Diese Ausbildung der Querdichtung weist einen anderen Vorteil auf, der von ganz enormer wirtschaftlicher Bedeutung ist. Sie ermöglicht nämlich eine besonders einfache und kostengünstige Auswechslung bzw. Wartung der Stopf- oder Querdichtung.

Bei den gängigen Armaturen war nämlich eine Auswechslung der Querdichtung nur möglich, wenn das gesamte Gehäuse zunächst aus dem Leitungssystem ausgebaut und dann auseinander genommen bzw. zerlegt worden war. Die erfindungsgemäße Armatur jedoch eröffnet völlig andere Wartungsmöglichkeiten.

Als reiner Montagevorgang ist gemäß der Erfindung lediglich die Verbindung zwischen Schieberplatte und Spindelmutter zu entfernen. Danach muß man nur noch die Befestigungsschrauben der Brille entfernen und letztere über die Schieberplatte nach oben hin abziehen. Dadurch wird die Querdichtungskammer zugänglich. Man kann also bei eingebauter Armatur die Querdichtung in denkbar einfacher Weise auswechseln. Nach Auswechseln der Querdichtung oder Stopfbuchsendichtung wird wiederum die Brille von oben über die Schieberplatte so eingesetzt, daß ihr unterer Endbereich in die Kammer eindringt und die Dichtung bzw. die Dichtungselemente zusammendrückt. Die Brille muß dann befestigt werden, und danach kann wiederum die Verbindung zwischen Schieberplatte und Spindel hergestellt werden.

Dieser beschriebene Austauschvorgang betrifft den Austausch von Dichtungen, die aus in sich geschlossenen Strängen bestehen.

Der Austausch der Stopfbuchsendichtung ist jedoch noch wesentlich einfacher, wenn man keine in sich geschlossene, ringförmige Schnur, sondern einfache, zwei Enden aufweisende Schnüre verwendet.

Zu diesem Zweck fährt man die Schieberplatte in die vollständig geöffnete Position. In dieser Position befindet sich auch die Querverbindung zwischen Schieberplatte und Spindelmutter in der oberen Endlage. Dadurch wird eine hinreichend große lichte Höhe geschaffen, um welche die Brille nach oben angehoben werden kann. Sie muß lediglich so weit angehoben werden, daß die Dichtungsstränge herausgenommen werden können. Anschließend können die bandförmigen Dichtungsstränge einer nach dem anderen eingelegt werden. Dies erfolgt so, daß zunächst ein Band um die Schieberplatte gelegt und allseitig nach unten in die Querdichtungskammer hineingedrückt wird. Selbstverständlich ist die Länge dieses Bandes so bemessen, daß dann, wenn es an der Schieberplatte anliegend in die Querdichtungskammer geschoben wird, die beiden Enden des Bandes mit einem hinreichenden Vordruck gegeneinander anliegen. Es werden jetzt, soweit erwünscht weitere Dichtungsstränge eingeführt. Anschließend werden sie durch Einsetzen und Verspannen der Brille mit dem gewünschten Druck gegeneinander gepreßt.

Zweckmäßigerweise ist der in den durch die Vertiefung gebildeten Stopfbuchsenraum hinein vorstehende untere Abschnitt der Brille entsprechend der Tiefe der Vertiefung, der Höhe der Stopfbuchsen- oder Querdichtung und dem gewünschten Druck auf die Stopfbuchsendichtung dimensioniert.

Diese Ausführungsform der Erfindung erlaubt die gewünschte Voreinstellung des Preßsitzes der Stopfbuchsendichtung, ohne daß eine Feineinstellung bei der Befestigung der Brille an den Gehäuseoberhälften erforderlich wäre.

Vorteilhafterweise hat die Brille beiderseits des Spaltes zur Aufnahme der Schieberplatte Vorsprünge mit Augen zur Aufnahme von Schraubbolzen zur Verbindung mit den Gehäusehälften aufweist.

Die Breite der den Stopfbuchsenraum bildenden Vertiefung kann kleiner als der Abstand zwischen den Außenseiten der U-förmigen Dichtung sein und in ihrem äußeren Bereich bis zur Oberkante der U-förmigen Dichtung reichen.

Durch diese Ausbildung sind die Oberseite der beiden U-förmigen Nuten teilweise abgeschlossen, da der Übergang von der Nut bis zur weiter innen liegenden Außenwand des Stopfbuchsenraums die oberen Enden der Nut abschließt.

Nach einer anderen Weiterbildung der Erfindung ist die den Stopfbuchsenraum bildende Vertiefung im Bereich zwischen den inneren Seiten der U-förmigen Nuten gegenüber den unteren Kanten des Stopfbuchsenraums zur Durchflußöffnung hin versetzt und der in die Schieberkammer vorstehende Teil der U-förmigen Dichtung endet etwa in Höne der unteren Kante der Stopfdichtungskammer.

Diese Ausführungsform ermöglicht es, zumindest einen Teil der Stopfbuchsendichtung in der Stopfdichtungskammer um die Schieberplatte derart anzuordnen, daß die Unterseite der Stopfbuchsendichtung an der unteren, nach oben weisenden Kante des Stopfbuchsenraums anliegt. In den seitlichen Randbereichen des Stopfbuchsenraums liegt die Unterseite der Stopfbuchsendichtung an der Oberkante des in die Schieberkammer vorstehenden Profils des U-förmigen Dichtungskörpers an.

Nach einer Weiterbildung der Erfindung weist der in der Nut liegende Abschnitt des U-förmigen Dichtungskörpers in seinem oberen Endabschnitten im Bereich des Stopfbuchsenraums eine etwa kreissegmentförmige Ausnehmung auf.

Durch diese Ausnehmungen wird eine satte Anlage des äußeren Umfangs des unteren Teils der Stopfbuchsendichtung an den Innenseiten dieser Ausnehmungen der U-förmigen Dichtung ermöglicht. Dadurch wird wiederum die Dichtwirkung zwischen der U-förmigen Dichtung einerseits und der Stopfbuchsendichtung andererseits erheblich vergrößert.

Die Stopfbuchsendichtung kann aus zwei Lagen von die Schieberplatte allseitig umschließendem Material bestehen, sie kann aber auch aus drei Lagen von die Schieberplatte allseitig umschließendem Material bestehen.

Nach einer Weiterbildung der Erfindung die Stopfbuchsendichtung aus zwei Packungssträngen, zwischen denen ein O-Ring oder eine Rundschnur anbgeordnet ist.

Zweckmäßigerweise besteht der O-Ring der Stopfbuchsendichtung aus Elastomer besteht. Die Stränge und/oder der O-Ring können in sich geschlossene Stränge oder Schnüre sein. Die Stränge und/oder der O-Ring können aber auch Strangoder Schnurenden sein, die in der Stopfdichtungskammer um den Schieber geschlungen eine in sich geschlossene Form bilden.

Die Dichtungsstränge können Vierkantstränge sein. Diese Vierkantstränge haben eine besonders große Anlagefläche mit den Wänden der Querdichtungskammer und mit den Berührungsflächen mit dem U-förmigen Dichtungskörper. Sie ermöglichen somit aufgrund ihrer Form eine besonders gute Dichtungswirkung.

Vorteilhafterweise bestehen die Dichtungsstränge aus einem gut gleitenden Material bestehen, z. B. aus Teflon bestehen.

Diese Materialien weisen relativ geringe Elastizität und Verformbarkeit auf. Sie müssen deshalb zu der Schieberplatte hin vorgespannt sein. Diese Vorspannung muß jedoch eine gewisse Elastizität haben, um Toleranzen der Schieberplatte und der Schieberplattenbewegung auszugleichen. Aus diesem Grunde ist zwischen den beiden umlaufenden Vierkantsträngen ein O-Ring oder eine Rundschnur aus einem Elastomer vorgesehen. Diese Ausbildung der Stopfdichtung, und ihre Anordnung in der Kammer, die oben durch die Druck ausübende Brille begrenzt ist, ermöglicht eine sehr genaue gewünschte Voreinstellung der Stopfdichtung.

Die dreilagige Stopfbuchsendichtung hat sich für eine Reihe von Verwendungszwecken als besonders vorteilhaft herausgestellt. Wenn kurzfristig ein Druckstoß auf die Schieberplatte ausgeübt wird und diese sich, dem Druck ausweichend, verformt, geschieht folgendes:
Die Schieberplatte weist zu der Richtung hin, aus der der Stoß kam, eine konkave Form auf, und auf der anderen Seite weist sie eine konvexe Form auf. Die Vierkantstränge und auch der O-Ring biegen sich nach außen hin, so daß die Anlage der drei Dichtelemente an der äußeren Oberfläche der Schieberplatte erhalten bleibt.

An der inneren, konkaven Oberfläche tritt jedoch ein anderes Phänomen auf. Die relativ trägen und nur geringfügig verformbaren Vierkantstränge können der schnellen Ausweichbewegung der Schieberplatte nicht folgen. Zwischen ihnen und der Schieberplatte würde somit temporär ein kleiner Spalt entstehen, durch den Medium nach außen austreten könnte. Der unter Vorspannung stehende, elastomere O-Ring dagegen dehnt sich, weil die Vorspannung nachgibt, aus und folgt der Ausweichbewegung der Platte. Er liegt somit auch während dieser kurzzeitigen Verformungen ständig dichtend auch an der konkaven Oberfläche der Schieberplatte an.

Die Ausbildung der Querdichtung oder Stopfbuchsendichtung aus mehreren Lagen mit einem elastomeren Dichtkörper dazwischen bringt auch den Vorteil mit sich, daß die gesamte Armatur wartungsfreundlicher wird. Normalerweise, wenn die Stopfbuchsendichtung nur aus Vierkantsträngen besteht, welche sich nach einer gewissen Benutzungsdauer setzen, muß durch Nachstellen des Druckes durch einen äußeren Druck- oder Führungskörper der Preßsitz der Stopfbuchsendichtung wieder hergestellt werden. Bei der erfindungsgemäßen Ausführungsform jedoch übernimmt der elastomere O-Ring diese Vorspannung. Auch wenn die Packungsstränge oberhalb und unterhalb des O-Ringes sich setzen, d. h. wenn ihr Querschnitt kleiner wird, wird der verbleibende Raum durch den O-Ring, der ja aus elastomerem Material besteht, ausgefüllt. Auf diese Weise übernimmt er Nachstellarbeiten der gesamten Dichtung. Auch die Wartungszeiten, zwischen denen diese Querdichtung nachgestellt wird, werden somit erheblich verlängert.

Bei der bevorzugten Ausführungsform der Erfindung hat der Dichtkörper einen angenäherten T-förmigen Querschnitt. Der schmalere Stegabschnitt dient als inneres Dichtprofil, dessen innere Oberfläche an der Schmalseite der Schieberplatte anliegt. Der Rücken ist breiter als das innere Dichtprofil. In diesem Rücken befindet sich die Armierung.

Üblicherweise sind bei Schieberarmaturen seitliche Führungsleisten durchgehend nach unten hin ausgeführt, mit der Folge, daß an der Übergangsstelle des unteren gekrümmten Teils der Schieberplatte mit der seitlichen Führungsleiste jeweils eine nur punktförmige Anlage entsteht. An dieser Stelle können enorm hohe Drücke entstehen, die die Beschichtung der Führungsleiste zerstören können.

Aufgabe der Erfindung ist es deshalb ferner, eine Führungsleiste für die Schieberplatte zu schaffen, die auch bei starkem Strömungsdruck keine besonders kleinen oder gar punktförmigen Anlage- oder Andruckstellen zwischen Schieberplatte und Teilen des Armaturgehäuses entstehen läßt.

Diese Aufgabe ist bei Absperrarmaturen mit zwei Gehäusehälften, die eine Durchflußöffnung umschließen, und mit eine Schieberplatte, die seitlich auf an den Gehäuse ausgebildeten Führungsleisten geführt ist, dadurch gelöst, daß die seitlichen Führungsleisten der Schieberplatte an ihrem unteren Endabschnitten rechtwinklig zur Längsrichtung der Führungsleiste zurückgesetzt sind.

Jede Gehäusehälfte weist parallel zueinander zwei in Schließrichtung verlaufende Führungsleisten auf. In geöffneter Stellung schneidet die untere Kante des Schiebers die Innenseite der Führungsleiste derart, daß eine punktförmige Auflage gebildet wird. Wird der Schieber ein Stück weit in Richtung Schließstellung verschoben, verschiebt sich auch die punktförmige Anlage- oder Andruckstelle um den entsprechenden Betrag nach unten. Solange der Schieber sich noch in teilweiser Öffnungsstellung befindet, kann kein großer Druck aufgebaut werden. In dem Moment, in dem der Schieber den letzten verbleibenden Spalt überbrückt und die Armatur schließt, baut sich schlagartig ein hoher Druck auf. Wenn in diesem Übergangsbereich kurz vor der endgültigen Schließstellung der Schieberplatte an eine Stelle, die entsprechend weiter runtergewandert ist, immer noch punktförmig anläge, würde auf dieser punktförmigen Anlagefläche eine sehr hohe Kraft wirken, so daß die Schieberplatte mit sehr hohem Druck gegen das Gehäuse gepreßt würde. Dadurch bestände die Gefahr, daß die Beschichtung des Gehäuses beschädigt würde.

Diese Gefahr ist bei der erfindungsgemäßen Absperrarmatur nicht zu befürchten. Der Schieber ist in seinem unteren Endbereich in Abstimmung auf die Form der Führungsleiste ausgebildet. Wenn sich die untere Anlagekante der Schieberplatte noch in einem geringen Abstand von der Oberfläche des im unteren Teil der U-förmigen Dichtung befindet, liegt sein seitlicher Randbereich an der Führungsleiste an. Der untere Randbereich der Schieberplatte steht dabei jedoch über die rechtwinklig zur Führungsleistenrichtung ausgebildete untere Kante in Schließbewegungsrichtung vor. Auf diese Weise ist gewährleistet, daß noch vor Erreichen der Schließendstellung der geführte Randbereich der Schieberplatte eine linienförmige Berührung mit der Führungsleiste hat. Diese linienförmige Berührung bleibt erhalten, auch wenn die Schieberplatte in die Schließendstellung bewegt und eine große Kraft auf die Schieberplatte ausgeübt wird. Da jetzt die Schieberplatte nirgendwo eine nur punktförmige sondern eine flächenförmige Berührung mit der Führungsleiste hat, wird die bei den bekannten Armaturen an der punktförmigen Berührungsfläche zwangsläufig auftretende Punktverpressung vermieden.

Solange die Schieberplatte von den Führungsleisten der beiden Gehäusehälften geführt und nicht verbogen wird, ist ohnehin nur ein sehr geringer Druck vorhanden, da sich die auswirkende Kraft auf die gesamten Flächen der Führungsleisten und der anliegenden geführten Flächen der Schieberplatte verteilt.

Besonders problematisch wird es für die Führungen dann, wenn im Bereich nahe der Schließstellung durch den ansteigenden Druckaufbau die Schieberplatte leicht verformt wird. In dieser Situation traten bei den bekannten Schiebern stets die punktförmige Verpressung mit unkalkulierbar hohem Druckaufbau auf. Dieser hohe Verpressungsdruck auf einem kleinen Punkt kann jetzt nicht mehr stattfinden, da jetzt die Schieberplatte, außer an der gesamten Fläche der Führungsleisten, auch im Bereich der Verformung großflächig aufgefangen wird, nämlich über die gesamte Breite der abgewinkelten Kante.

Aufgabe der Erfindung ist es ferner, die Absperrarmatur so zu gestalten, daß sie mit im wesentlichen gleichen Bauteilen sowohl mit steigender Spindel als auch mit nichtsteigender Spindel aufgebaut werden kann.

Diese Aufgabe ist gemäß der Erfindung dadurch gelöst, daß der obere Abschluß des Absperrarmaturoberteil aus zwei Platten besteht, aus einer unteren, der Abschlußplatte, die eine Ausnehmung zur Aufnahme der Spindel aufweist, welche Ausnehmung einen erheblich größeren Durchmesser als die Spindel hat, und aus einer Aufsatzplatte, welche die Spindel exzentrisch fixiert und sie, falls sie steigt, führt.

Die Exentrizität der Spindel in der Aufsatzplatte ist nach einer Weiterbildung der Erfindung so bemessen ist, daß sie der einen Ausrichtung und Montage der Aufsatzplatte zentrisch über der Schieberplatte angeordnet ist, während die Spindel in der anderen Ausrichtung und Montage der Aufsatzplatte exzentrisch außerhalb der Schieberplattenebene angeordnet ist.

Bei dieser Beschreibung ist das Wort Spindel im umfassenden Sinn gebraucht. Es umfaßt sowohl Spindeln mit einem Schraubgewinde als auch Kraftkolbenstangen, die kein Gewinde aufweisen.

Die Erfindung ist im folgenden anhand eines Ausführungsbeispiels und der beiliegenden Zeichnung näher erläutert. In letzterer zeigen:

Fig. 1 eine Vorderansicht einer Schieberarmatur im Schnitt,

Fig. 2 einen Schnitt längs der Linie II-II der Figur 1,

Fig. 3 eine Seitenansicht einer Armatur im Schnitt, mit Kraftkolben und zentrisch angeordneter Spindel, sowie Draufsicht auf die untere Abschlußplatte, die gleichzeitig eine Anbauplatte ist,

Fig. 4 eine Vorderansicht der Armatur,

Fig. 5 die Draufsicht auf die Armatur mit weggelassenem Oberteil,

Fig. 6 die mehrteilige Ausbildung der ausbaubaren Halterungen für verschiedene Antriebe,

Fig. 7 den Übergang zwischen U-förmiger Dichtung und der Stopfdichtung,

Fig. 8 einen Querschnitt der Kammer für die U-förmige Dichtung, und

Fig. 9 die Form der U-Dichtung.

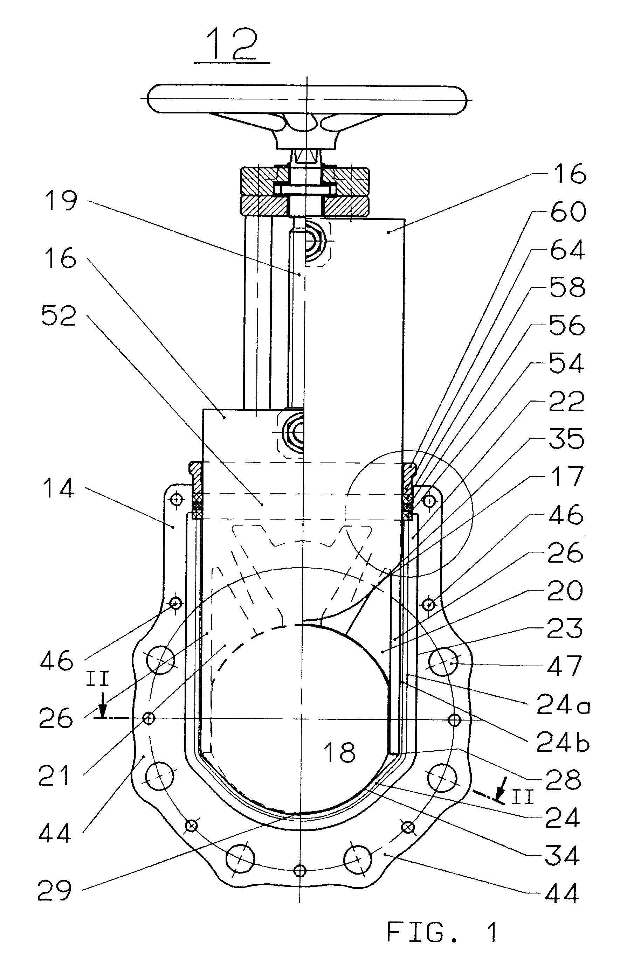

Die Figur 1 zeigt eine Vorderansicht einer Schieberarmatur 12 im Schnitt. In dieser Darstellung ist in der linken Hälfte die Schieberplatte 16 in der unteren Endstellung, also in der Schließstellung gezeigt, während in der rechten Hälfte der Figur 1 die Schieberplatte 16 in geöffneter Stellung dargestellt ist, in der sie die Durchflußöffnung 18 vollständig freigibt.

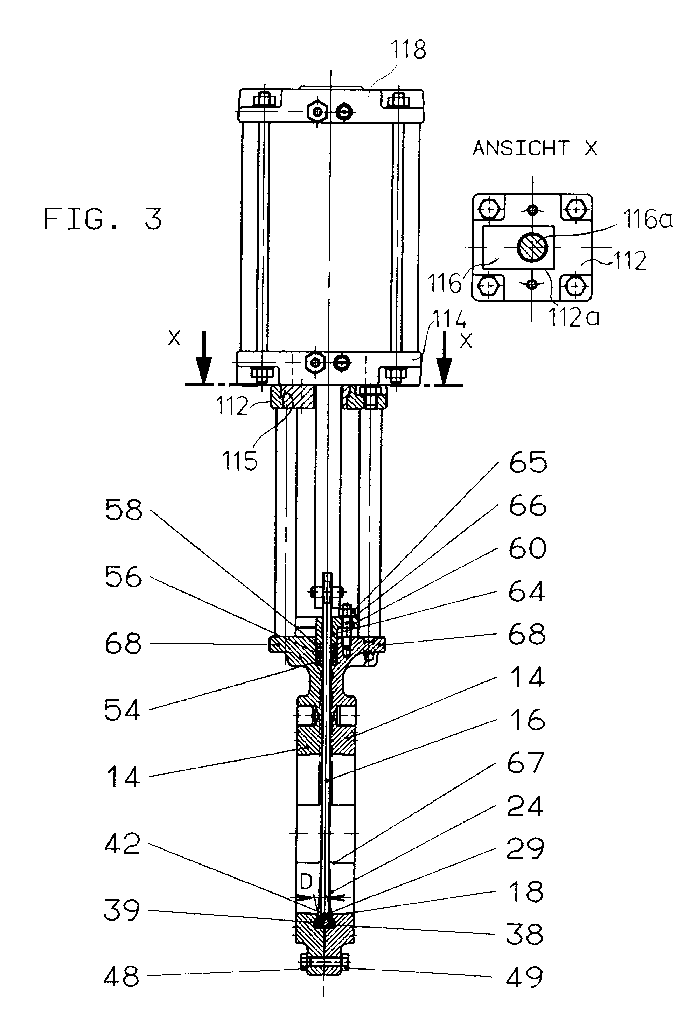

Die Gehäusehälfte 14 weist im mittleren Abschnitt oberhalb der Durchflußöffnung, also zwischen dieser und ihrem oberen Rand einen zurückgesetzten Abschnitt 20 auf, wodurch ein Teil der Schieberplattenkammer gebildet wird. Diese Gehäusehälfte 14 ist spiegelsymmetrisch zu der anderen Gehäusehälfte, so daß beide Gehäusehälften 14 im zusammengesetzten Zustand durch die jeweiligen zurückgesetzten Abschnitte 20 die Schieberplattenkammer bilden, wie man in Figur 3 sieht.

Diese durch den zurückgesetzten Abschnitt 20 gebildete Vertiefung ist so ausgebildet, daß rechts und links jeweils eine Führungsleiste 26 entsteht, an denen die ihr zugewandte Oberfläche der Schieberplatte 16 bei ihrer Bewegung geführt wird. Die Führungsleiste 26 ist unten bei 28 längs einer Linie durch Zurücksetzen des entsprechenden Gehäuseteils begrenzt. Auf die Bedeutung dieses linienartigen Abschlusses der Führungsleiste an ihrem unteren Ende, jedoch oberhalb der untersten Stelle der Durchflußöffnung 29, wird weiter unten noch eingegangen werden.

In ihrem unteren Endabschnitt ist die Durchflußöffnung 18 symmetrisch zu dem Spindelachsenpunkt 29, an der tiefsten Stelle der Durchflußöffnung, kreissegmentförmig ausgebildet. Wie man jedoch in Figur 1 sieht, ist dieser kreissegmentförmige Abschnitt nur auf etwa ein Drittel der Länge von der Spindelachse zu dem rechten Randbereich der Schieberplatte hin kreissegmentförmig ausgebildet. Von da an geht die Kontur der Durchflußöffnung 18 in einen im wesentlichen geradlinigen Teil 34 über, der bis zum seitlichen Randbereich reicht. Die Schieberplatte 16 ist an ihrem unteren Ende dementsprechend ausgebildet, wie bei 17 dargestellt.

Dieser im wesentlichen geradlinige Teil der unteren Schieberplattenkante 17 schneidet den inneren Rand der Führungsleisten 26 an einem Punkt 35, der in Figur 1 eingekreist ist. Die beschriebene Form der Führungsleisten 26 und der unteren Kante 17 der Schieberplatte weist besondere Vorteile auf:

Wie man bei 35 sieht, gibt es eine Stelle, an der die Schieberplatte 16 punktförmig an der jeweiligen Führungsleiste 26 anliegt. Solange kein Druck auf die Schieberplatte 16 ausgeübt wird, ist diese Anordnung problemlos. Wird jedoch die Schieberplatte in die Schließstellung verschoben, so tritt insbesondere kurz vor dem Erreichen der Schließendlage ein besonders hoher Druck auf die Schieberplatte 16 auf. Dadurch wird ein so hoher Anpreßdruck erzeugt, daß die Führungsleiste beschädigt werden kann.

Um diese Gefahr zu vermeiden ist die Führungsleiste 26 an ihrem unteren Ende bei 28 senkrecht abgeschnitten. Wenn die Schieberplatte 16 nach unten verfahren wird, wandert auch der Anlagepunkt 35 nach unten. Die Abmessungen sind jedoch, insbesondere auch durch die geradlinigen Teile 17 der unteren Schieberplattenkante so bemessen, daß dieser geradlinige Kantenabschnitt sich bereits unterhalb der Kante 28 der Führungsleiste 26 befindet, bevor die Schieberplatte 16 die untere Endlage erreicht, also bevor der volle Strömungsdruck auf die Schieberplatte 16 wirkt.

Wird jetzt die Schieberplatte 16 weiter nach unten in Richtung Schließstellung verschoben, wobei der Strömungsdruck auf die Schieberplatte 16 erheblich anwachsen kann, so besteht keine Gefährdung der Oberfläche der Führungsleiste 26 und auch keine Gefahr der Beschädigung der Schieberplatte 16, da letztere mit ihrem Randbereich flächenhaft seitlich an den Führungsleisten 26 anliegt. Ein punktförmiger Anpreßdruck kann somit gemäß der vorliegenden Erfindung im untersten Bereich der Schieberplattenstellung gar nicht entstehen.

Außerhalb der beiden Führungsleisten 26 ist eine U-förmige Nut 22 ausgebildet. Diese Nut 22 verläuft von der Ebene des zurückgesetzten hinteren Abschnittes 20 in die Gehäusehälfte 14 hinein, und die äußere Begrenzungswand 23 dieser Nut 22 erstreckt sich über die genannte Ebene des zurückgesetzten Abschnitts 20 hinaus bis zur Berührungsebene der Randbereiche 44 der Gehäusehälfte 14.

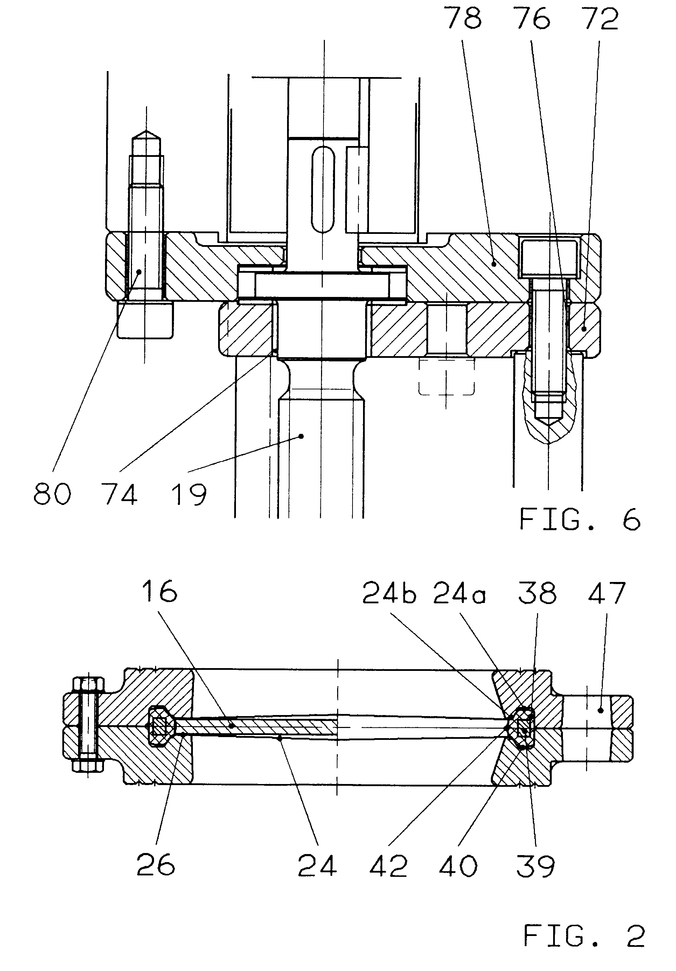

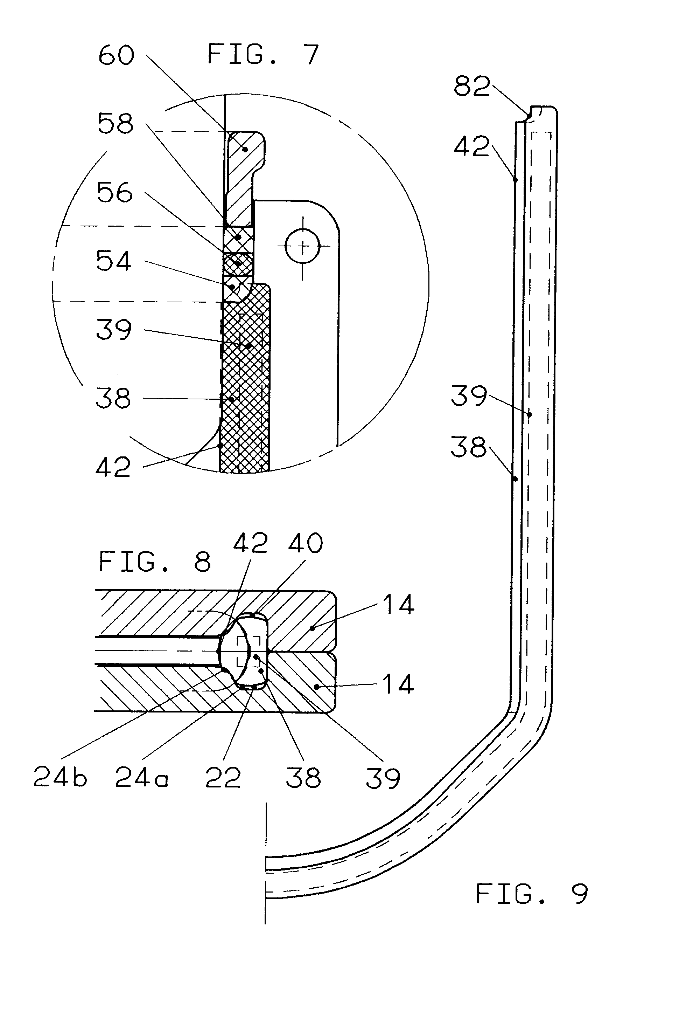

Die innere Begrenzungswand der Nut 22 verläuft von der Nutenbodenkante 24a schräg zum oberen Rand 24b, siehe auch Figuren 2 und 8. Letzterer befindet sich geringfügig unterhalb der führenden Oberfläche der Führungsleisten 26. Wie jedoch durch die Linie 24 angezeigt ist, vergleiche auch Figur 2, ist dieser obere Rand von dem linienförmigen unteren Ende 28 der Führungsleiste 26 zu dem Spindelachsenpunkt 29 zunehmend in die Gehäusehälfte 14 hinein versenkt ausgebildet. Dadurch entsteht zwischen den gegenüberliegenden oberen inneren Rändern 24 der beiden Nuten 22, wenn beide Gehäusehälften 14 miteinander verbunden sind, ein verbreiteter Abschnitt, siehe Figur 2, dessen Bedeutung im folgenden beschrieben wird.

In der durch die Nuten 22 gebildeten U-förmigen Dichtungskammer ist ein im Querschnitt profilförmig ausgebildeter, U-förmiger Dichtkörper 38 angeordnet. Dieser Dichtkörper enthält eine Stahlbewehrung 39, siehe Figur 2. Wie man aus letzterer sieht, füllt der Dichtkörper oder das Dichtungsprofil 38 die Nut 22 nicht vollständig aus sondern läßt im Nutenboden noch einen Verdrängungsraum 40 frei. Im übrigen ist der Querschnitt des Dichtungskörpers 38 so geformt, daß er an dem äußeren Umfang der Nut 22 anliegt und ein Stegabschnitt 42 zwischen den Gehäusehälften 14 zur Schieberplattenkammer hin vorsteht. Die innere Oberläche dieses Stegabschnittes 42 erstreckt sich auf einen kleinen Bereich über die Führungsleisten 26, wobei die in Durchflußrichtung rechten bzw. linken Seiten des Dichtungskörpers 38 dichtend an den entsprechend geformten Seitenflächen der Gehäusehälften 14 anliegen.

Wie man in Figur 2 besonders deutlich sieht, ist der mittlere, zur Schieberplatte hin vorstehende Stegabschnitt 42 des Dichtungskörpers und von dem rechten und linken Seitenteil zur Spindelachse hin im unteren Bereich erheblich verbreitert.

Wenn die Schieberplatte 16 in Richtung ihrer Schließstellung verschoben wird, kommen ihre seitlichen Ränder mit der ihnen zugewandten Oberfläche des Stegabschnittes 42 des U-förmigen Dichtungskörpers 38 zum Eingriff. Dabei wird in den beiden Schenkelabschnitten des U-förmigen Dichtkörpers 38 die Oberfläche des Stegabschnittes 42 jeweils nach außen verdrängt, wodurch eine sichere Abdichtung zwischen den jeweiligen Seiten der Schieberplatte 16 und den ihnen zugewandten Oberflächen des Dichtungskörpers 38 im Schenkelbereich desselben erzielt wird. Das dabei verdrängte Volumen des Dichtungsprofils 38 kann in die Verdrängungsräume ausweichen.

In der Schließstellung liegt die Schieberplatte 16 mit ihrem unteren Randbereich an dem gekrümmten Abschnitt des inneren Stegabschnitts 42 des Teils des Dichtungskörpers 38 an.

Zum besseren Verständnis der Bedeutung dieser beschriebenen Formgebung wird auf folgendes hingewiesen. Bei der üblichen Form des Dichtkörpers, der eine gleichbleibende Breite hat, besteht die Gefahr, daß unter Druckbeaufschlagung durch die Auslenkung des unteren Endes der Schieberplatte die Schieberplattenkante auf eine Kante des Gehäuses aufläuft und die schützende Beschichtung desselben beschädigt. Hinzu kommt, daß durch dieses Auflaufen die Schieberplatte selber erheblich beschädigt werden kann. Ferner weisen die klassischen Dichtungen den Nachteil auf, daß wegen der gleichbleibenden Oberfläche und wegen der Auslenkung des unteren Endes der Schieberplatte die Armatur im unteren Endbereich undicht und beschädigt wird, solange das Schieberplattenende ausgelenkt ist.

Aufgrund der erfindungsgemäß verbreiterten Form des U-förmigen Dichtungskörpers 38, nämlich einer Breite, die merklich breiter als die Dicke der Schieberplatte 16 ist, werden alle diese Nachteile verhindert. Wird die Schieberplatte 16 in die Schließstellung gefahren, so liegt sie so an der dichtenden Oberfläche des Stegabschnitts 42 der U-förmigen Dichtung an, daß beiderseits der Schieberplattenoberflächen noch ein hinreichendes Volumen der Dichtung vorhanden ist. Die Schieberplatte 16 wird bei ihrer Führung in die Schließstellung mit ihrer Endbereichsfläche so in den Dichtkörper 38 hineingeführt, daß beiderseits der Schieberplatte 16 noch ein Volumen des Stegabschnitts 42 des Dichtungskörpers 38 verbleibt. Wenn jetzt aufgrund eines starken Strömungsdruckes die Schieberplatte 16 seitlich ausgelenkt wird, wirkt das verbleibende Volumen des Dichtungsmaterials zwischen der Schieberplattenkante einerseits und der benachbarten Kante 24 des Gehäuses andererseits zum einen als schützende Pufferung und zum anderen als Dichtung.

Wie man aus Figur 1 sieht, weisen die Nut 22 und der darin liegende Dichtkörper 38 von rechts nach links jeweils nur einen relativ kleinen Querschnitt auf. Somit ist der Randbereich 44 der Gehäusehälfte 14 frei für Schrauben 46 und Flanschbohrungen 47. Die kleineren Bohrungen 46 sind für Schraubbolzen vorgesehen, mit denen die beiden Gehäusehälften 14 miteinander verbunden werden. Die größeren Bohrungen 47 sind als Anflanschbohrungen für anzuflanschende Rohre ausgebildet, oder als Führungsbohrungen für Bolzen, wenn die Armatur zwischen Rohrflanschen eingeklemmt wird.

Wie man dieser Figur entnehmen kann, kann die beschriebene Armatur sowohl als Absperrschieber zwischen zwei Rohren eingebaut, als auch direkt als Endarmatur verwendet werden.

Im oberen Bereich der Gehäusehälften 14 sieht man eine Kammer 52, welche die Querdichtung aufnimmt. Letztere besteht im Ausführungsbeispiel aus mehreren um die Platte umlaufenden Strängen 54, 56 und 58. Der untere Vierkantstrang 54 und der obere Vierkantstrang 58 bestehen beispielsweise aus Teflon. Zwischen diesen ist ein O-Ring 56 angeordnet, der aus einem Elastomer besteht.

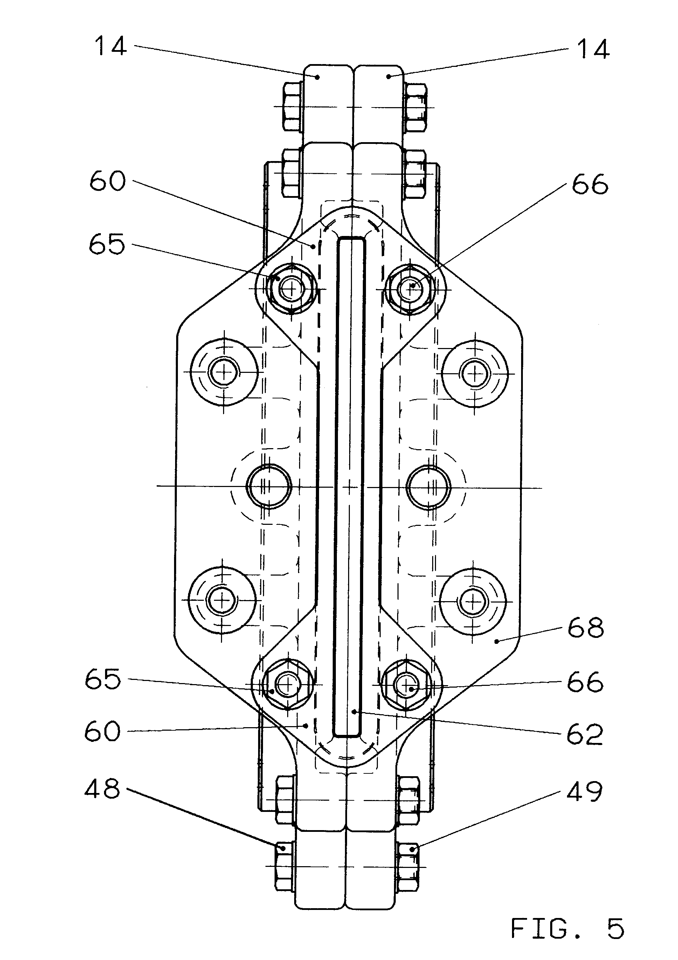

Diese Querdichtungskammer 52 ist oben durch eine Brille 60 abgeschlossen, die eine Ausnehmung 62 zur Durchführung der Schieberplatte 16 enthält, siehe Figur 5. Die Brille 60 ist mit ihrem unteren Endbereich 64 in die Querdichtungskammer eingesetzt. In dieser Lage drückt sie die Dichtungsstränge 54, 56 und 58 mit gewünschtem Vordruck gegeneinander.

Weitere Einzelheiten dieser Brille 60 und deren Montage sind anhand der Figur 5 näher beschrieben.

Die Figur 3 zeigt eine Seitenansicht der Armatur im Schnitt. Der obere Teil, welcher die Spindel 19 enthält und zum Betätigen der Schieberplatte 16 dient, ist, ähnlich wie der Oberteil bei der Figur 1, im folgenden nicht näher beschrieben.

In dieser Figur 3 sieht man, daß die beiden Gehäusehälften 14 symmetrisch ausgebildet sind. Die Schieberplatte 16 ist in ihrer Schließstellung dargestellt, in der sie unten bei 29 an dem vorstehenden Stegabschnitt 42 des Dichtungskörpers 38 anliegt. Die beiden Gehäusehälften sind durch Schrauben 48 und Muttern 49 miteinander verbunden.

Im unteren Bereich dieser Figur 3 sieht man gut, daß unterhalb von 67 der innere Rand der Nut 22 sich in der rechten Gehäusehälfte mit zunehmender Näherung an den unteren Randbereich nach rechts geneigt verläuft, während er in der linken Gehäusehälfte nach links geneigt verläuft. Auf diese Weise ist der Abstand D der inneren Ränder der Nuten 22 am unteren Ende der Durchflußöffnung 18 erheblich breiter als die Schieberplatte 16. Die Oberfläche des der Schieberplatte 16 zugewandten Stegabschnittes 42 des U-förmigen Dichtungskörpers 38 ist ebenfalls erheblich breiter als die Dicke der Schieberplatte 16.

Wie man in dieser Figur 3 sieht, ist der obere Teil der rechten Gehäusehälfte 14 als nach rechts vorstehender Ausleger 68 ausgebildet, während der obere Teil der linken Gehäusehälfte 14 nach links als Ausleger augebildet ist. In diesem Ausleger 68, welcher etwa auf der Höhe der Querdichtungskammer ausgebildet ist, sind Schrauben oder Bolzen 66 und Muttern 65 zur Befestigung der Brille 60 eingeschraubt.

Im übrigen bezeichnen gleiche Bezugszeichen dieselben Teile wie die entsprechenden Bezugszeichen in Figur 1.

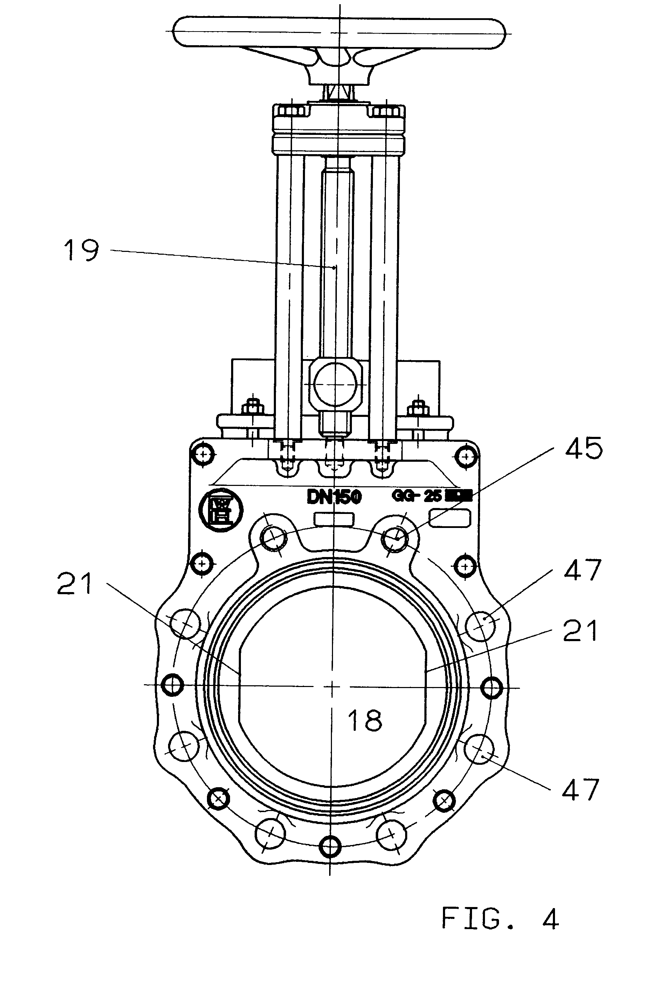

Die Figur 4 zeigt eine Vorderansicht der Armatur. Wie man aus dieser Figur sieht, ist der Querschnitt der Durchflußöffnung 18 rechts und links auf einer Länge 21 etwa geradlinig begrenzt. Der übrige Umfang der Strömungs- oder Durchflußöffnung 18 ist oben und unten kreissegmentförmig ausgebildet. In dieser Figur sieht man besonders deutlich, daß die Ausnehmungen 47 zum Anflanschen am Rohr oder auch zum Anflanschen von Rohren geeignet sind. Ferner sind Gewindesacklöcher 45 oberhalb der Durchflußöffnung 18 vorgesehen.

Der obere Antriebsteil der Armatur, der die Spindel 19 und damit die Schieberplatte 16 antreibt, ist nicht näher beschrieben, da er nicht erfindungswesentlich ist.

Die Figur 5 zeigt eine Draufsicht auf die Armatur mit abgenommenem Antriebsteil. In der Figur sieht man auch die Ausleger 68 und auch die eingesetzte Brille 60. Die Brille ist mittels Schrauben oder Bolzen 66 und Muttern 65 mit den Gehäusehälften 14 miteinander verschraubt. Ferner sieht man deutlich die Ausnehmung 62, welche zur Aufnahme der Schieberplatte 16 dient.

Die Figur 6 zeigt das obere Ende des Antriebsteils. Wie man in dieser Figur sieht, ist eine Endplatte 72 vorgesehen, welche eine außermittige Ausnehmung 74 zur Aufnahme des oberen Endes der Spindel 19 enthält. Gemäß der vorliegenden Erfindung ist diese Endplatte 72 jedoch relativ schmal ausgeführt, da sie nicht die gesamte Stabilität sichern muß. Vielmehr ist diese Platte 72 als Adapterplatte ausgebildet. Sie enthält weitere Öffnungen 76, über welcher eine weitere Platte 78 mit der Endplatte 72 verbunden werden kann. Diese obere Platte 78, die leicht auswechselbar ist, weist wiederum Öffnungen 80 zur Montage weiterer Antriebsteile (z.B. Elektroantrieb, Kraftkolbenantrieb) auf. Gemäß dieser Weiterbildung der Erfindung ist es möglich, eine Armatur einschließlich der Spindelhalterung so auszubilden, daß sie durch leichtes Auswechseln der weiteren Platte 78 und durch deren Verbindung mit der Adapterplatte 72 umgerüstet werden kann. Die Umrüstung, z. B. von Handantrieb auf Elektroantrieb, ist in denkbar einfacher Weise ausführbar, ohne die gesamte Armatur auseinandernehmen zu müssen.

In Figur 7 sieht man den Übergang zwischen dem U-förmigen Dichtkörper 38 und den Querdichtungssträngen 54, 56 und 58. Im oberen Endbereich jedes der beiden Schenkel endet der nach innen vorstehende Stegabschnitt 42 vor dem anderen Teil des Dichtungskörpers 38. In dieser Ausnehmung liegt der untere Strang, der quer um die Schieberplatte 16 verläuft.

Wie man in der Draufsicht der Figur 8 sieht, weist auch der Schenkelabschnitt des Dichtungskörpers 38 eine abgerundete Ausnehmung 82 auf. Diese Ausnehmung 82 ermöglicht eine satte seitliche Anlage des Dichtungsstranges 54. Dieser liegt somit sowohl unten als auch seitlich dichtend in der Ausnehmung des Dichtungskörpers 38. Auf diese Weise wird eine besonders gute Dichtung gewährleistet.

Die Figur 9 zeigt eine Ansicht eines Teils des Dichtungskörpers 38. Mit gestrichelten Linien ist die Lage des Bewehrungsstahls 39 angedeutet. Ferner sieht man in dieser Figur, daß der nach innen vorstehende Profilsteg 42 unterhalb des oberen Randes des Schenkels des Dichtungskörpers 38 endet. Außerdem sieht man die abgerundete Ausnehmung 82 in dem Querteil des Dichtungskörpers 38, welche abgerundete Ausnehmung die satte Anlage des Dichtungsstranges 54 ermöglicht.

Aus Figur 7 sieht man ferner, daß der äußere Rand der Querdichtungskammer 52 gegenüber dem äußeren Rand der Nuten 22 nach innen versetzt ist. Durch diese Versetzung wird ebenfalls eine besonders gute Dichtleistung gewährleistet. Diese wird noch dadurch verstärkt, daß die Brille 60 mit ihrem unteren Abschnitt 64 von oben auf den Vierkantstrang 58 drückt. Durch diesen Einsatz der Brille 60 werden die Dichtungsstränge 54, 56 und 58 mit der gewünschten Vorspannung gegeneinander gedrückt.

Eine andere Weiterbildung der Erfindung, welche es erlaubt, die Absperrarmatur mit im wesentlichen gleichen Bauteilen sowohl mit steigender Spindel als auch mit nichtsteigender Spindel zu benutzen, ist im oberen Teil der Figur 3 dargestellt.

Dort sieht man, daß statt der üblicherweise vorhandenen einstückigen Abschlußplatte gemäß der Erfindung zwei Platten vorgesehen sind, nämlich eine untere Abschlußplatte 112 und einem in dieser liegenden Einlegestück 116. Die untere Abschlußplatte weist eine längliche, im wesentlichen rechteckige Ausnehmung auf, deren Längsrichtung erheblich größer als der Durchmesser der Spindel ist. Wie man aus der geänderten Schraffur in Figur 3 sieht, ist diese Ausnehmung stufenartig verkleinert.

Das Einlegestück 116 weist an seiner Unterseite einen nach unten vorstehenden Absatz 115 auf. Entsprechend komplementär zu der beschriebenen Verkleinerung der Ausnehmung ist auch der Absatz 115 mit einer stufenartigen Versetzung ausgebildet. Diese Weiterbildung der Erfindung ermöglicht es, das Einlegestück 116 mit dem nach unten vorstehenden Absatz 115 in die Ausnehmung der unteren Abschlußplatte 112 einzusetzen. Die beschriebene Formgebung der beiden Platten bildet gleichzeitig einen Formschluß gegen seitliche Versetzungen der beiden Platten 112 bzw. 116 relativ zueinander.

Die Ausnehmung der unteren Abschlußplatte dagegen ist, wie oben erwähnt, wesentlich länger als breit. Sie ermöglicht auch eine Durchführung der Spindel in einer Ebene seitlich links neben der Ebene der Schieberplatte. Zu einer solchen Spindelanordnung, die insbesondere für Ventile mit nicht steigender Spindel erwünscht ist, muß nach dieser Ausführungsform der Erfindung das Einlegestück 116 so ausgerichtet und montiert werden, daß die Spindelausnehmung 116a exzentrisch außerhalb der Spindelplattenebene angeordnet ist.

Die gesamte Anordnung der Absperrarmatur kann im übrigen unverändert bleiben, einschließlich der unteren Abschlußplatte 112, welche der sonst üblichen einstückigen Abschlußplatte von Absperrarmaturen entspricht.

Diese Ausführungsform der Erfindung ist in der Ansicht X der Figur 3 dargestellt, die eine Draufsicht auf die Ebene X-X zeigt. Nach dieser weiteren Ausführungsform ist in der asymmetrischen Ausnehmung der unteren Abschlußplatte 112 ein ebenfalls asymmetrisches Einlegestück 116 angeordnet, dessen Umfang komplementär zum Umfang der Ausnehmung ausgebildet ist. Die Dicke des Einlegestückes entspricht etwa der Dicke der unteren Abschlußplatte 114.

In der dargestellten ist ein die Spindel aufnehmendes Loch 116a des Einlegestückes in der Ebene der Schieberplatte angeordnet. Wenn mann dieses Einlegestück 116 um 180° um die Achse des Loches 116a gedreht in die Ausnehmung der unteren Abschlußplatte 112 einlegt, befindet sich das Loch 116a zur Führung der Spindel in einer Ebene links neben der Ebene der Schieberplatte. In diesem Fall würde dann ein anderer Kraftkolbenantrieb auf der unteren Abschlußplatte 112 mit Hilfe der gezeigten Schrauben montiert werden. Im übrigen bleibt die gesamte Armatur unverändert.

Bei dieser Beschreibung ist das Wort Spindel im umfassenden Sinn gebraucht. Es ummfaßt sowohl Spindeln mit einem Schraubgewinde als auch Kraftkolbenstangen, die kein Gewinde aufweisen.

**Patentansprüche**

1. Absperrarmatur mit
    zwei Gehäusehälften, die eine Durchflußöffnung umschließen und im Randbereich miteinander verbunden sind,
    von denen mindestens eine Gehäusehälfte einen zurückgesetzten inneren Abschnitt zur Aufnahme der Schieberplatte aufweist,
    und mit einem den Bereich der Schieberplatte unten und seitlich umgebenden U-förmigen Dichtungskörper,
    dadurch gekennzeichnet, daß jede Gehäusehälte in ihrem oberen Bereich eine quer verlaufende Vertiefung zur Aufnahme der Stopfbuchsendichtung hat, die seitlich und nach unten hin begrenzt, nach oben hin jedoch offen ist, und

daß eine an den Oberseiten der Gehäusehälften befestigbare Brille vorgesehen ist, die einen Spalt zur Aufnahme der Schieberplatte (16) und einen nach unten teilweise in die Vertiefung vorstehenden, zu dieser komplementär ausgebildeten Bereich aufweist.

2. Absperrarmatur nach Anspruch 1, dadurch gekennzeichnet, daß der in den durch die Vertiefungen hinein gebildeten Stopfbuchsenraum (52) vorstehende untere Abschnitt der Brille entsprechend der Tiefe der Vertiefung, der Höhe der Stopf- oder Querdichtung und dem gewünschten Druck auf die Stopfbuchsendichtung dimensioniert ist.

3. Absperrarmatur nach Anspruch 1 oder 2, dadurch gekennzeichnet, daß die Brille beiderseits des Spaltes zur Aufnahme der Schieberplatte (16) Vorsprünge mit Augen zur Aufnahme von Schraubbolzen zur Verbindung mit den Gehäusehälften aufweist.

4. Absperrarmatur nach einem der vorhergehenden Ansprüche, dadurch gekennzeichnet, daß die Breite der den Stopfbuchsenraum (52) bildenden Vertiefung kleiner als der Abstand zwischen den Außenseiten der U-förmigen Dichtung ist und in ihrem äußeren Bereich bis zur Oberkante der U-förmigen Dichtung reicht.

5. Absperrarmatur nach einem der vorhergehenden Ansprüche, dadurch gekennzeichnet, daß die den Stopfbuchsenraum (52) bildende Vertiefung im Bereich zwischen den inneren Seiten der U-förmigen Nuten (22) gegenüber den unteren Kanten des Stopfbuchsenraums (52) zur Durchflußöffnung hin versetzt ist und der in die Schieberkammer vorstehende Teil der U-förmigen Dichtung etwa in Höne der unteren Kante des Stopfdichtungsraums (52) endet.

6. Absperrarmatur nach einem der vorhergehenden Ansprüche, dadurch gekennzeichnet, daß der in der Nut (22) liegende Abschnitt des U-förmigen Dichtungskörpers in seinen oberen Endabschnitten im Bereich des Stopfbuchsenraums (52) eine etwa kreissegmentförmige Ausnehmung aufweist.

7. Absperrarmatur nach einem der vorhergehenden Ansprüche, dadurch gekennzeichnet, daß die Stopfbuchsendichtung aus zwei Lagen von die Schieberplatte (16) allseitig umschließendem Material besteht.

8. Absperrarmatur nach einem der vorhergehenden Ansprüche, dadurch gekennzeichnet, daß die Stopfbuchsendichtung aus drei Lagen von die Schieberplatte (16) allseitig umschließendem Material besteht.

9. Absperrarmatur nach einem der vorhergehenden Ansprüche, dadurch gekennzeichnet, daß die Stopfbuchsendichtung aus zwei Packungssträngen besteht, zwischen denen ein O-Ring (56) oder eine Rundschnur angeordnet ist.

10. Absperrarmatur nach Anspruch 9, dadurch gekennzeichnet, daß kennzeichnet, daß der O-Ring (56) der Stopfbuchsendichtung aus Elastomer besteht.

11. Absperrarmatur nach einem der Ansprüche 8 bis 10, dadurch gekennzeichnet, daß die Stränge (58) und/oder der O-Ring (56) in sich geschlossene Stränge oder Schnüre sind.

12. Absperrarmatur nach einem der Ansprüche 8 bis 10, dadurch gekennzeichnet, daß die Stränge (58) und/oder der O-Ring (56) Strang- oder Schnurenden sind, die in der Stopfdichtungskammer um die Schieberplatte (16) geschlungen eine in sich geschlossene Form bilden.

13. Absperrarmatur nach einem der Ansprüche 8 bis 12, dadurch gekennzeichnet, daß die Dichtungsstränge Vierkantstränge (58) sind.

14. Absperrarmatur nach einem der Ansprüche 8 bis 13, dadurch gekennzeichnet, daß die Dichtungsstränge (58) aus einem gut gleitenden Material bestehen.

15. Absperrarmatur nach einem der Ansprüche 8 bis 14, dadurch gekennzeichnet, daß die Dichtungsstränge (58) aus Teflon bestehen.

16. Absperrarmatur mit zwei Gehäusehälften, die eine Durchflußöffnung umschließen und eine Schieberplatte (16) aufweisen, die seitlich auf an den Gehäuse ausgebildeten Führungsleisten geführt ist, dadurch gekennzeichnet, daß die seitlichen Führungsleisten der Schieberplatte (16) an ihren unteren Endabschnitten rechtwinklig zur Längsrichtung der Führungsleiste (26) zurückgesetzt sind.

17. Absperrarmatur nach einem der vorhergehenden Ansprüche, dadurch gekennzeichnet, daß die Schieberplatte (16) im unteren Endbereich nur nahe der Spindelachse kreissegmentförmig und von dort aus im wesentlichen geradlinig zu den parallelen Rändern des Schiebers hin ausgebildet ist und der Dichtkörper (38) komplementär ausgebildet ist.

18. Absperrarmatur mit Spindelantrieb, dadurch gekennzeichnet, daß der obere Abschluß des Absperrarmaturoberteils aus zwei Platten besteht, aus einer unteren Abschlußplatte (112), die eine Ausnehmung zur Aufnahme eines Einlegestücks (116) aufweist, welche Ausnehmung einen erheblich größeren Durchmesser als die Spindel hat.

19. Absperrarmatur nach Anspruch 18, dadurch gekennzeichnet, daß die Zentrizität der Spindel in dem Einlegestück (116) so bemessen ist, daß sie bei einer Ausrichtung und Montage mit der Abschlußplatte (112) zentrisch über der Schieberplatte (16) angeordnet ist.

20. Absperrarmatur nach Anspruch 19, dadurch gekennzeichnet, daß die Exentrizität der Spindel in dem Einlegestück (116) so bemessen ist, daß sie in der anderen Ausrichtung und Montage mit der Abschlußplatte (112) exzentrisch außerhalb der Schieberplattenebene angeordnet ist.

21. Absperrarmatur nach einem der Ansprüche 18 bis 20, dadurch gekennzeichnet, daß das Einlegestück (116) einen nach unten vorstehenden, in die Ausnehmung der unteren Abschlußplatte (112) vorstehenden Absatz (115) aufweist.

22. Absperrarmatur nach einem der Ansprüche 18 bis 21, dadurch gekennzeichnet, daß die Ausnehmung (112a) der unteren Abschlußplatte (112) einen nach innen vorstehenden Vorsprung und der nach unten vorstehende Absatz (115) des Einlegestücks (116) einen komplementären Versprung aufweist.

23. Absperrarmatur nach einem der Ansprüche 18 bis 22, gekennzeichnet durch ein Einlegestück (116), welches ein asymmetrisch angeordnetes Spindelaufnahmeloch (116a) und einen zur Öffnung in der unteren Aufnahmeplatte (112) komplementären Außenumfang aufweist.

**12**

FIG. 1

FIG. 6

FIG. 2

FIG. 3

ANSICHT X

FIG. 4

FIG. 5

EP 0 487 904 A2

FIG. 7

60
58
56
54
39
38
42

FIG. 8
42 40
14
14
24b 24a 22 38 39

82
42
39
38

FIG. 9

16